# EUROPÄISCHE PATENTSCHRIFT

(11) **EP 3 338 155 B1**
(45) Veröffentlichungstag und Bekanntmachung des Hinweises auf die Patenterteilung: **22.04.2020**
(21) Anmeldenummer: 16738713.3
(22) Anmeldetag: 06.07.2016
(51) Int. Cl.: G05G 1/44, G05G 5/03

(54) **PEDALVORRICHTUNG MIT DÄMPFUNG DER BETÄTIGUNG**
PEDAL DEVICE WITH DAMPING OF THE ACTUATION
DISPOSITIF À PÉDALE À ACTIONNEMENT AMORTI

(30) Priorität: 18.08.2015 DE 102015113679
(43) Veröffentlichungstag der Anmeldung: 27.06.2018
(73) Patentinhaber: AB Elektronik GmbH, 59368 Werne (DE)
(72) Erfinder: NEUBAUER, Dirk, 58769 Nachrodt-Wiblingwerde (DE)
(74) Vertreter: Kalkoff & Partner Patentanwälte PartmbB
(86) Internationale Anmeldenummer: PCT/EP2016/066040
(87) Internationale Veröffentlichungsnummer: WO 2017/029023

(56) Entgegenhaltungen:
- DE-A1- 10 218 627
- DE-A1-102005 059 975
- DE-A1-102010 062 370
- DE-C2- 4 426 549

## Beschreibung

Die Erfindung betrifft eine Pedalvorrichtung. Pedalvorrichtungen dienen als fußbetätigte Bedienelemente zur Steuerung von Maschinen, insbesondere von Fahrzeugen. Dabei ist üblicherweise ein Basiselement fest angeordnet, zum Beispiel im Fußraum des Fahrersitzes eines Kraftfahrzeugs und ein Pedalelement ist zur Betätigung gegenüber dem Basiselement auslenkbar, beispielsweise schwenkbar. Hierzu ist das Pedalelement am Basiselement gelagert, so dass die Auslenkbewegung ermöglicht wird. Dabei ist eine gewisse Dämpfung der Auslenkbewegung für eine exakte Bedienung wünschenswert.

Die DE 20 2006 008 453 U1 beschreibt ein Fahrpedal mit einem Basisteil und einem hiergegen schwenkbarem Pedalteil. Ein Sensorhebel ist am Basisteil schwenkbar gelagert. Durch Federn wird eine Nase des Sensorhebels gegen den Pedalteil gedrückt, so dass dieser stets in Richtung einer Leerlaufstellung zurückgestellt wird. Der Sensorhebel weist zwei Hülsenteile auf, zwischen denen ein Achsteil eingeklemmt ist. Durch die Einklemmung ergibt sich eine definierte, gewünschte Reibung zwischen dem Sensorhebel und dem Achsteil, die zur Erzeugung einer Bewegungshysterese genutzt wird.

Die DE 10 2005 059 975 A1 beschreibt ein Fahrpedal für Fahrzeuge mit einer Dämpfungseinheit. Diese umfasst eine Zangeneinheit mit zwei Zangenschenkeln und Zangenklauen. Die Zangenklauen liegen an einem Wellenelement an. Ein Zangenschenkel ist am Pedalelement und der andere Zangenschenkel an einer Pedalrückholeinheit angeordnet. Wird eine Pedalkraft aufgebracht, so bewirkt diese zusammen mit einer Federkraft der Pedalrückholeinheit eine Verformung der Zangeneinheit, so dass die Zangenklauen an das Wellenelement angepresst werden und eine Reibung entsteht, die die Drehbewegung um das Wellenelement dämpft.

Die DE 44 26 549 C2 offenbart ein Fahrpedal mit einer Montagebasis und daran schwenkbar gelagertem Hebel, der ein konvexes Lagerteil umfasst, das in einer offenen, konkaven Lagerstelle an der Basis drehbar gelagert ist. Eine Wippe weist ein konkaves Anpressteil und ein Widerlager auf und ist mittels einer Welle schwenkbar gelagert.

Zwischen einem Mitnehmernocken an Lagerteil und dem Widerlager der Wippe ist eine Druckfeder eingespannt, so dass das konkave Anpressteil der Wippe unter Einschluss des konvexen Lagerteils des Hebels gegen die offene, konkave Lagerstelle der Montagebasis angedrückt wird.

Die DE 10 2010 062 370 A1 beschreibt gattungsgemäß eine Pedalwertgeberanordnung für ein Kraftfahrzeug, mit einem zwischen einer Ausgangsstellung und einer Endstellung beweglichen Fahrpedal. Die Anordnung umfasst ein Lager für das Fahrpedal, ein elastisches Element, insbesondere eine Feder, welche auf das Fahrpedal eine Rückstellkraft in Richtung der Ausgangsstellung aufbringt, um das Fahrpedal in die Ausgangsstellung zu bewegen und eine Einrichtung zur Erzeugung einer Reibhysterese an dem Fahrpedal. Die Einrichtung umfasst einen Zapfen und eine Schale, so dass aufgrund einer Relativbewegung zwischen einer Zapfenreibflächche an der Schale eine Reibkraft zwischen dem Zapfen und der Schale erzeugbar ist, wobei zwischen Zapfen und Schale ein Abstand besteht.

Es ist Aufgabe der Erfindung, eine Pedalvorrichtung vorzuschlagen, die bei möglichst kompaktem Aufbau eine sichere Lagerung des Pedalelements mit Dämpfung der Auslenkbewegung ermöglicht.

Diese Aufgabe wird gelöst durch eine Pedalvorrichtung gemäß Anspruch 1. Abhängige Ansprüche beziehen sich auf vorteilhafte Ausführungsformen der Erfindung.

Die erfindungsgemäße Pedalvorrichtung umfasst ein Basiselement, bevorzugt zur festen Anordnung, beispielsweise im Fußraum eines Kfz, und ein gegenüber dem Basiselement auslenkbares Pedalelement. Hierbei kann es sich beispielsweise um einen Pedalarm oder eine Pedalplatte handeln. Die Auslenkbewegung ist bevorzugt eine Schwenkbewegung.

Um die Auslenkbewegung zu ermöglichen, ist ein mit dem Pedalelement verbundenes Lagerelement vorgesehen, das in mindestens einer Lagerschale am Basiselement aufgenommen und drehbar gelagert ist. Das Lagerelement umfasst erfindungsgemäß mindestens ein erstes und ein zweites Lagerteilelement. Das erste und das zweite Lagerteilelement sind gegeneinander beweglich. Bevorzugt handelt es sich um separate Elemente, alternativ kann das erste Lagerteilelement auch einstückig mit dem zweiten Lagerteilelement gebildet sein, wenn die beiden Lagerteilelemente durch einen flexiblen Abschnitt gegeneinander beweglich sind.

Das erste Lagerteilelement ist erfindungsgemäß mit dem Pedalelement verbunden bzw. gekoppelt. Hierunter wird eine Kopplung verstanden, bei der eine Betätigung des Pedalelements, d. h. Bewegung gegenüber dem Basiselement, zu einer Drehung des ersten Lagerteilelements in der Lagerschale führt. Beispielsweise kann das erste Lagerteilelement starr mit dem Pedalelement gekoppelt sein.

Mindestens ein Rückstellelement ist zur Einwirkung auf das zweite Lagerteilelement vorgesehen. Es kann beispielsweise ein Federelement umfassen und dient zum Aufbringen einer Rückstellstellkraft. Die Einwirkung auf das zweite Lagerteilelement kann dabei einerseits direkt ausgeübt werden, beispielsweise durch direkten Kontakt des Rückstellelements mit dem zweiten Lagerteilelement oder indirekt durch Kontakt des Rückstellelements mit einem Element, das mit dem zweiten Lagerteilelement verbunden ist, insbesondere bevorzugt starr gekoppelt.

Erfindungsgemäß sind das erste und das zweite Lagerteilelement so zueinander angeordnet, dass sie sich an mindestens einer Stützstelle gegeneinander abstützen. Die Anordnung ist dabei so gebildet, dass sich bei Auslenkung des Pedalelements gegen die Wirkung des Rückstellelements eine nach außen gerichtete Andruckkraft auf die Lagerteilelemente ergibt, durch die die Lagerteilelemente an die Lagerschale angedrückt werden.

Bei einer Betätigung, nämlich Auslenkung des Pedalelements in Betätigungsrichtung, also gegen die Wirkung des Rückstellelements, werden somit die Lagerteilelemente nach außen an die Lagerschale angedrückt. Gleichzeitig ergibt sich eine Relativbewegung zwischen den Lagerteilelementen und der diese mindestens zum Teil umgebenden Lagerschale. Durch die Bewegung der aufeinander gedrückten Teile ergibt sich eine erhöhte Lagerreibung.

Durch die Reibung wird die Auslenkbewegung gedämpft. Während es prinzipiell möglich ist, zusätzliche Dämpfungselemente vorzusehen, werden solche separate Vorrichtungen nicht benötigt, sondern die gewünschte Dämpfung kann bereits im Lager erzielt werden.

Hierfür steht bei der erfindungsgemäßen Pedalvorrichtung eine relativ große Fläche zur Verfügung, da die Reibung zwischen einer oder mehreren äußeren Flächen der Lagerteilelemente und entsprechenden Gegenflächen der Lagerschale stattfindet. So können relativ hohe Reibkräfte bei einem gleichzeitig kompakten Aufbau der Pedalvorrichtung erzielt werden.

Die nach außen gerichtete Andruckkraft auf die Lagerteilelemente wird bevorzugt durch eine Spreizung der Lagerteilelemente gegeneinander erzielt. Von den gemeinsam in der Lagerschale aufgenommenen Lagerteilelementen spreizen sich bei der Betätigungsbewegung mindestens Teile, die dann nach außen gegen die Lagerschale gedrückt werden. Dabei ist weiter bevorzugt, dass die Lagerteilelemente an der Stützstelle gegeneinander verschwenken, wobei angesichts der engen Anlage bereits kleinste Bewegungen ausreichen. Eine Schwenkachse kann durch die Stützstelle definiert sein und liegt bevorzugt parallel zur Drehachse des Lagerelements.

Gemäß einer Weiterbildung der Erfindung sind die Lagerteilelemente in der Lagerschale drehbar gelagert. Das erste Lagerteilelement ist um eine erste Drehachse und das zweite Lagerteilelement um eine zweite Drehachse drehbar gelagert. Die beiden Drehachsen können bevorzugt zusammenfallen, so dass das erste und das zweite Lagerteilelement in der Lagerschale zur Drehung um eine gemeinsame Drehachse gelagert sind.

Die Stützstelle ist dabei bevorzugt außerhalb der ersten, der zweiten und/ oder außerhalb der gemeinsamen Drehachse angeordnet. Eine solche Anordnung ist besonders günstig, um eine Spreizung der Lagerteilelemente zu erreichen, so dass hierdurch der gewünschte Andruck an die Lagerschale erzielt werden kann.

Gemäß einer bevorzugten Weiterbildung ist das erste Lagerteilelement Teil eines Pedalhebels, d. h. eines schwenkbaren Elements, das dem Pedalelement entspricht, Teil hiervon ist oder hiermit verbunden ist. Das zweite Lagerteilelement bildet bevorzugt einen Stützhebel, d.h. einen zweiten, schwenkbaren Hebel. Der Pedalhebel und der Stützhebel sind dann bevorzugt an der Stützstelle gegeneinander schwenkbar. Durch das Verschwenken von Pedalhebel und Stützhebel gegeneinander kann die Andruckkraft erzeugt werden, mit der die Lagerteilelemente an die Lagerschale angedrückt werden.

Das Rückstellelement ist bevorzugt so angeordnet, dass seine Wirkung der Betätigungsrichtung des Pedalelements entgegengesetzt ist. Ohne Einwirkung äußerer Kräfte kann sich so das Pedalelement in eine Leerlaufstellung zurückstellen, aus der es durch Kraftwirkung in Betätigungsrichtung auslenkbar ist, üblicherweise bis zu einer Vollbetätigungsstellung. Um dies zu erreichen, kann bevorzugt das Pedalelement so mit dem Lagerelement gekoppelt sein, dass sich bei einer Auslenkung des Pedalelements in die Betätigungsrichtung eine Drehung des Lagerelements in eine erste Drehrichtung ergibt, wohingegen das Rückstellelement so angeordnet ist, dass es das Lagerelement in einer zweiten, der ersten Drehrichtung entgegen gesetzten Drehrichtung beaufschlagt. Somit wirken am Lagerelement im Fall der Betätigung des Pedalelements zwei gegensätzliche Kräfte bzw. Drehmomente, nämlich die Betätigungskraft bzw. das Betätigungsmoment, die über das Pedalelement auf das erste Lagerteilelement einwirken und die Rückstellkraft des Rückstellelements, die - direkt oder indirekt - auf das zweite Lagerteilelement einwirkt. Diese gegensätzlichen Kräfte bzw. Drehmomente, die auf die beiden Lagerteilelemente des Lagerelements wirken, können genutzt werden, um die gewünschten nach außen gerichteten Andruckkräfte zu erzielen und insbesondere die Spreizung der Lagerteilelemente relativ zueinander hervorzurufen. Besonders bevorzugt kann so eine Schwenkwirkung der beiden Lagerteilelemente gegeneinander an der Stützstelle erreicht werden, aus der sich die nach außen gerichtete Andruckkraft ergibt.

Die Verbindung des ersten Lagerteilelements mit dem Pedalelement kann zwar indirekt über verschiedene Möglichkeiten der Kraftübertragung wie Hebel etc. erfolgen. Bevorzugt ist das Pedalelement fest mit dem ersten Lagerteilelement verbunden. Eine besonders einfache Konstruktion kann erzielt werden, wenn das erste Lagerteilelement sogar einstückig mit dem Pedalelement ausgebildet ist.

Das Rückstellelement kann mindestens eine Feder umfassen. Um eine redundante Auslegung zu ermöglichen, werden mindestens zwei Federelemente bevorzugt. Die Feder kann zwischen dem Basiselement und dem zweiten Lagerteilelement wirkend angeordnet sein. Es sind verschiedene Federtypen möglich; bevorzugt werden Schraubendruckfedern.

Gemäß einer besonders bevorzugten Ausführungsform kann das Lagerelement im Wesentlichen einen runden Querschnitt aufweisen und bspw. seinerseits in einer zylindrischen Lagerschale angeordnet sein. Dabei kann die Unterteilung des Lagerelements in die beiden Lagerteilelemente so gestaltet sein, dass die Lagerteilelemente im Wesentlichen jeweils teilkreisförmige, besonders bevorzugt halbkreisförmige Querschnitte aufweisen. Bevorzugt ist dann zwischen den Lagerteilelementen die Stützstelle gebildet.

Die Stützstelle ist bevorzugt durch ein von einem der Lagerteilelemente vorstehendes Stützelement gebildet, das am anderen Lagerteilelement in einer Schwenklagerung aufgenommen ist. Die Schwenklagerung kann durch eine Vertiefung gebildet sein.

Bei der Lagerung des Lagerelements in der Lagerschale können sowohl die äußeren Lagerflächen der Lagerteilelemente als auch die innere Lagerfläche der Lagerschale jeweils zylindermantelförmig ausgebildet sein. So ergibt sich eine gut geführte Drehbewegung des Lagerelements um eine mittlere Drehachse.

Während die Lagerschale axial durchgehend gestaltet sein kann, hat es sich als konstruktiv außerordentlich günstig erwiesen, wenn die Lagerschale zwei axial im Abstand voneinander angeordnete Teilschalen aufweist. Mindestens eine der Teilschalen, bevorzugt beide, können dabei als Lagerdeckel ausgebildet sein. So lässt sich die Lagerschale besonders gut zusammenbauen und um das Lagerelement herum anordnen.

Nachfolgend werden Ausführungsformen der Erfindung anhand von Zeichnungen näher beschrieben. Dabei zeigen:
- Fig. 1: eine perspektivische Ansicht einer Pedalvorrichtung;
- Fig. 2: eine Seitenansicht der Pedalvorrichtung aus Fig. 1 mit Darstellung einer Leerlaufstellung sowie einer Vollbetätigungsstellung;
- Fig. 3: eine perspektivische Darstellung der Fahrpedalvorrichtung aus Fig. 1, 2 mit teilweise transparent dargestelltem Gehäuse;
- Fig. 4: eine perspektivische Explosionsdarstellung der Fahrpedalvorrichtung aus Fig. 1-3;
- Fig. 5: ein Längsschnitt durch die Fahrpedalvorrichtung aus Fig. 1-4 entlang der Linie D..D in Fig. 6;
- Fig. 6: ein Querschnitt durch eine Lagerung der Fahrpedalvorrichtung aus Fig. 1-5 entlang der Linie C..C in Fig. 5.

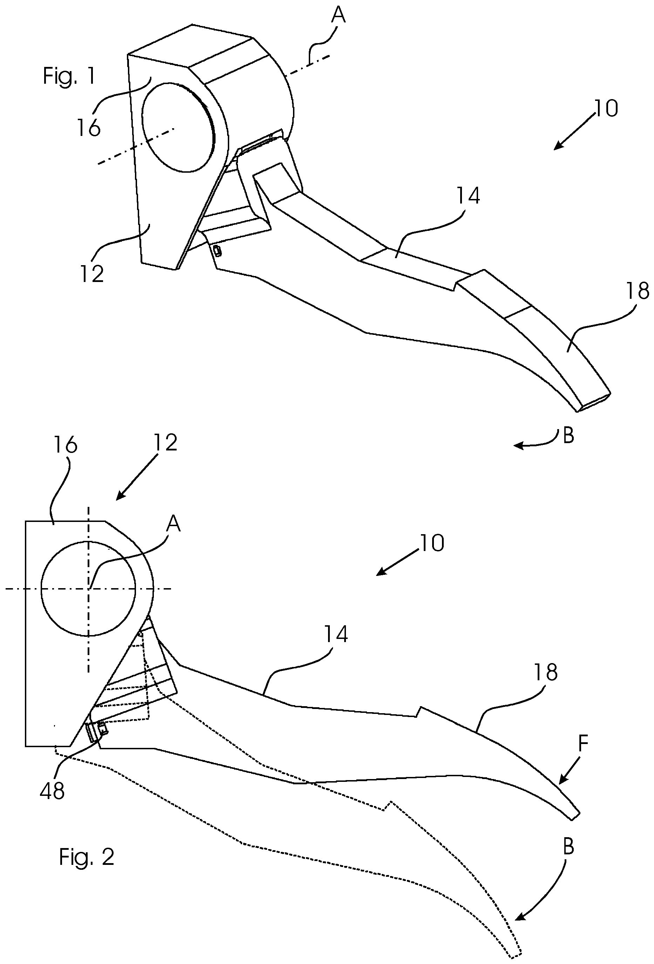

Fig. 1 zeigt eine Fahrpedalvorrichtung 10 mit einem zur festen Anordnung im Fußraum eines Kfz bestimmten Basiselement 12 und einem hiergegen durch eine Schwenkbewegung in einer Betätigungsrichtung B um eine Achse A auslenkbaren Pedalarm 14.

In einem Gehäuse 16 des Basiselements 12 ist ein Rückstellelement 20 vorgesehen, das nachfolgend näher erläutert wird. Durch die Wirkung des Rückstellelements 20 wird der Pedalarm 14 in die in Fig. 2 mit durchgezogenen Linien gezeigte Leerlaufstellung zurückgestellt. Unter Wirkung einer Betätigungskraft F auf einen Fußteil 18 des Pedalhebels 14 kann dieser um die Achse A in Betätigungsrichtung B gegen die Wirkung des Rückstellelements 20 ausgelenkt werden, wie in Fig. 2 gezeigt. In einer Vollbetätigungsstellung (in Fig. 2 gestrichelt dargestellt) begrenzt ein Anschlag die weitere Schwenkbewegung des Pedalarms 14. Vorher wird ein Kick-Down-Schalter 48 aktiv und bewirkt eine zu überwindende Kick-Down-Kraftspitze.

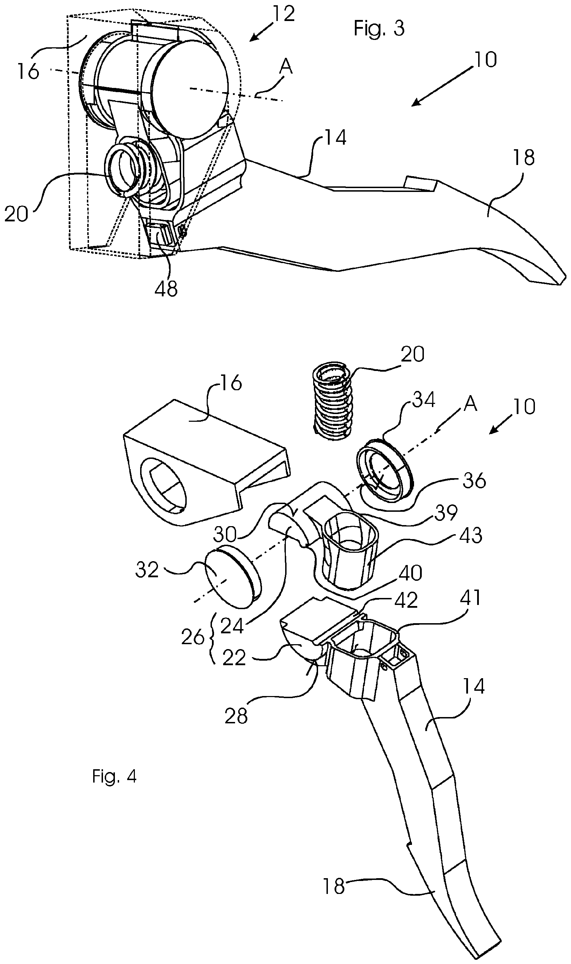

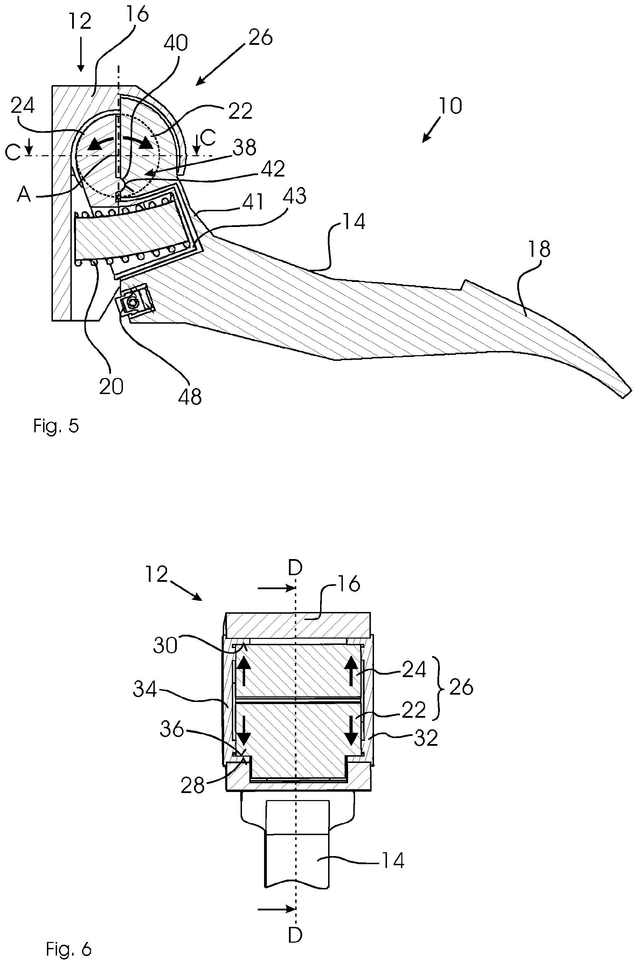

Fig. 3-6 zeigen dabei den inneren Aufbau des Basiselements 12 und der Lagerung des Pedalhebels 14. Dessen Schwenkbewegung ist wie insbesondere im Querschnitt der Lager in Fig. 6 ersichtlich geführt durch die um die Drehachse A drehbare Aufnahme eines Lagerelements 26 in einer durch Lagerdeckel 32, 34 gebildeten Lagerschale. Das Lagerelement 26 ist gebildet aus einem ersten Lagerteilelement 22 und einem zweiten Lagerteilelement 24.

Wie insbesondere die Explosionsdarstellung in Fig. 4 zeigt, ist das erste Lagerteilelement 22 einstückig mit dem Pedalhebel 14 ausgebildet. Das erste Lagerteilelement 22 liegt im montierten Zustand (Fig. 5) neben dem zweiten Lagerteilelement 24 und bildet so das Lagerelement 26.

Das erste und zweite Lagerteilelement 22, 24 weisen jeweils äußere, zylindermantelförmige Anlageflächen 28, 30 auf, mit denen sie in den Lagerdeckeln 32, 34 aufgenommen sind, die hierzu passende innere, zylindermantelförmige Lagerflächen 36 aufweisen.

Wie insbesondere im Längsschnitt in Fig. 5 ersichtlich sind die Lagerteilelemente 22, 24 jeweils im Querschnitt etwa halbkreisförmig ausgebildet. Sie liegen aufeinander und stützen sich dabei über eine Stützstelle 38 ab, die gebildet ist durch einen gerundeten Vorsprung 40 am zweiten Lagerteilelement 30, der in einer gerundeten Ausnehmung 42 am ersten Lagerteilelement 22 aufgenommen ist.

Ein Stützhebel 39 umfasst eine Aufnahme 43 für das Rückstellelement 20 und einstückig hiermit ausgebildet das Lagerteilelement 24. Das als Schraubendruckfeder ausgebildete Rückstellelement 20 wirkt zwischen dem Gehäuse 16 des Basiselements 12 und der Aufnahme 43.

Zur Bildung des Lagerelements 26 werden der Stützhebel 39 und der Pedalhebel 14 so zusammengebracht, dass die Aufnahme 43 für das Rückstellelelment 20 in einer einstückig mit dem Pedalhebel 14 ausgebildeten Umfassung 41 aufgenommen wird. Im montierten Zustand, wenn das Lagerelement 26 in den Lagerdeckeln 32, 34 um die Achse A drehbar gelagert ist, liegen der Pedalhebel 14 und der Stützhebel 39 nur an der Stützstelle 38 aneinander an, während die Umfassung 41 im Abstand von der Aufnahme 43 angeordnet ist.

Für jedes der Lagerteilelemente 22, 24 bildet die Anlage der zylindermantelförmigen Außenflächen 28, 30 der Lagerteilelemente 22, 24 an den ebenfalls zylindermantelförmig ausgebildeten Innenflächen 36 der Lagerdeckel 32, 34 die für die drehbare Lagerung erforderliche Führung.

Auf diese Weise ist der mit dem ersten Lagerteilelement 22 starr gekoppelte, nämlich einstückig ausgebildete Pedalarm 14 schwenkbar am Grundelement 12 gelagert, wobei das Rückstellelement 20 durch seine Wirkung zwischen dem Gehäuse 16 des Basisteils 12 und der Federaufnahme 43 die Rückstellung des Pedalarms 14 in die Grundstellung bewirkt.

Eine Dämpfung dieser Bewegung ist gegeben durch die Lagerreibung, d. h. durch die Reibung der Außenflächen 28, 30 des Lagerelements 26 gegenüber den Innenflächen 36 der Lagerdeckel 32, 34. Diese wird im Fall der Betätigung, wenn also eine Kraft F auf das Fußelement 18 des Pedalarms 14 wirkt, um diesen in Betätigungsrichtung B auszulenken, durch eine Spreizung der Lagerteilelemente 22, 24 gegeneinander verstärkt.

Die Spreizwirkung lässt sich insbesondere anhand der Darstellung in Fig. 5 erläutern, in der die Lagerung in den dort nicht gezeigten Lagerdeckeln 32, 34 durch einen gestrichelten Kreis dargestellt ist: Wie dort dargestellt stützen sich die Lagerteilelemente 22, 24 an der exzentrisch, d. h. außerhalb der Schwenkachse A angeordneten Stützstelle 38 gegeneinander ab. Die Stützstelle 38 definiert so eine Schwenkachse, an die die Lagerteilelemente 22, 24 und damit auch die einstückig damit ausgebildeten Hebel, nämlich Pedalarm 14 und Stützhebel 39, gegeneinander schwenkbar sind. Die Wirkung des Rückstellelements 20 auf den Stützhebel 39 über die Aufnahme 43 bewirkt an dem einstückig hiermit ausgebildeten zweiten Lagerteilelement 24 ein Drehmoment entgegen der Betätigungsrichtung B, also in Fig. 5 entgegen dem Uhrzeigersinn. Hiergegen wirkt durch die Betätigungskraft F ein entgegengesetztes Drehmoment auf den Pedalarm 14 und auf das einstückig hiermit ausgebildete erste Lagerteilelement 22. Die Lagerteilelemente 22, 24 werden somit entgegengesetzt beaufschlagt.

Hierdurch kommt es an der Stützstelle 38 zu einer geringen Schwenkbewegung der Lagerteilelemente 22, 24 gegeneinander und somit zu einer Aufspreizung der beiden Teile 22, 24 des Lagerelements 26, wie durch Pfeile in Fig. 5, 6 dargestellt.

Diese Spreizbewegung setzt die Lagerung unter Spannung. Unter der gegensätzlichen Wirkung der Betätigungskraft F und der Kraft des Rückstellelements 20 werden die äußeren Flächen 28, 30 der Lagerteilelemente 22, 24 somit geringfügig auseinander bewegt und gegen die Lagerflächen 36 der Lagerdeckel 32, 34 gedrückt. Hierdurch entsteht eine stark erhöhte Lagerreibung.

Für diese Reibung stehen relativ große Flächen zur Verfügung. Somit können hohe Andruck-Kräfte wirken und trotz des sehr kompakten und einfachen Aufbaus letztlich hohe Reibungskräfte bzw. -momente erzielt werden.

Die gesamte Konstruktion der beschriebenen Ausführungsform eines Fahrpedals ist wie aus den Darstellungen ersichtlich äußerst einfach und mit wenigen Teilen aufgebaut. Das Fahrpedalelement lässt sich schnell und leicht zusammenbauen, indem das Rückstellelement 20 in die Aufnahme 43 eingesetzt wird und die beiden Lagerteilelemente 22, 24 aufeinander gelegt im Gehäuse 16 des Basisteils 12 angeordnet werden. Durch seitliches Aufstecken der Lagerdeckel 32, 34 wird eine formschlüssige Aufnahme des Lagerelements 26 gebildet.

Im Betrieb des Fahrpedalelements 10 ermittelt ein Sensor (nicht dargestellt) stets die aktuelle Betätigungsstellung, d. h. den Grad der Auslenkung in Betätigungsrichtung B und stellt diesen als elektrisches Signal zur Verfügung, um bspw. die Motorleistung zu steuern. Während verschiedene Arten von Sensoren verwendet werden können, wird die Verwendung eines induktiven Positionssensors bevorzugt, bei dem ein Sensorschaltkreis (nicht dargestellt) am Gehäuse 16 des Basisteils 12 angeordnet ist und die Position eines induktiven Indexelements am Pedalarm 14 ermitteln kann.

## Patentansprüche

1. Pedalvorrichtung mit
- einem Pedalelement (14, 18), das zur Betätigung gegenüber einem Basiselement (12) auslenkbar ist,
- und einem Lagerelement (26),
**dadurch gekennzeichnet, dass**
das Lagerelement (26) in mindestens einer Lagerschale (32, 34) am Basiselement (12) aufgenommen und drehbar gelagert ist, wobei das Lagerelement (26) mindestens ein erstes Lagerteilelement (22) und ein gegenüber dem ersten Lagerteilelement (22) bewegliches zweites Lagerteilelement (24) umfasst,
- wobei das erste Lagerteilelement (22) mit dem Pedalelement (14, 18) verbunden ist,
- mindestens ein Rückstellelement (20) zur Einwirkung auf das zweite Lagerteilelement (24) vorgesehen ist,
- und wobei das erste und zweite Lagerteilelement (22, 24) so zueinander angeordnet sind, dass sie sich an mindestens einer Stützstelle (38) gegeneinander abstützen, so dass sich bei Auslenkung des Pedalelements (14, 18) gegen die Wirkung des Rückstellelements (20) eine nach außen gerichtete Andruckkraft auf die Lagerteilelemente (22, 24) ergibt, durch die die Lagerteilelemente (22, 24) an die Lagerschale (32, 34) angedrückt werden.

2. Pedalvorrichtung nach Anspruch 1, bei der
- sich bei Auslenkung des Pedalelements (14, 18) die Andruckkraft durch eine Spreizung der Lagerteilelemente (22, 24) gegeneinander ergibt.

3. Pedalvorrichtung nach einem der vorangehenden Ansprüche, bei der
- das erste Lagerteilelement (22) in der Lagerschale um eine erste Drehachse (A) drehbar gelagert ist,
- und das zweite Lagerteilelement (24) in der Lagerschale (32, 34) um eine zweite Drehachse (A) drehbar gelagert ist,
- wobei die Stützstelle (38) außerhalb der ersten und der zweiten Schwenkachse angeordnet ist.

4. Pedalvorrichtung nach Anspruch 3, bei der
- das erste und das zweite Lagerteilelement (22, 24) in der Lagerschale (32, 34) zur Drehung um eine gemeinsame Drehachse (A) gelagert sind und die Stützstelle (38) im Abstand von der Drehachse (A) angeordnet ist.

5. Pedalvorrichtung nach einem der vorangehenden Ansprüche, bei der
- das erste Lagerteilelement (22) Teil eines Pedalhebels (14) ist,
- und das zweite Lagerteilelement (24) einen Stützhebel bildet,
- wobei der Pedalhebel (14) und der Stützhebel (39) an der Stützstelle (38) gegeneinander schwenkbar sind.

6. Pedalvorrichtung nach einem der vorangehenden Ansprüche, bei der
- das Pedalelement (14, 18) so mit dem Lagerelement (26) gekoppelt ist, dass sich bei einer Auslenkung des Pedalelements (14) in eine Betätigungsrichtung (B) eine Drehung des Lagerelements (26) in eine erste Drehrichtung ergibt,
- und das Rückstellelement (20) so angeordnet ist, dass es das Lagerelement (26) in einer zweiten, der ersten Drehrichtung entgegengesetzten Drehrichtung beaufschlagt.

7. Pedalvorrichtung nach einem der vorangehenden Ansprüche, bei der
- das Pedalelement (14, 18) fest mit dem ersten Lagerteilelement (22) verbunden, bevorzugt einstückig hiermit ausgebildet ist.

8. Pedalvorrichtung nach einem der vorangehenden Ansprüche, bei der
- das Rückstellelement (20) mindestens eine Feder umfasst, die zwischen dem Basiselement (12) und dem zweiten Lagerteilelement (24) wirkend angeordnet ist.

9. Pedalvorrichtung nach einem der vorangehenden Ansprüche, bei der
- das Lagerelement (26) im Wesentlichen einen runden Querschnitt aufweist.

10. Pedalvorrichtung nach Anspruch 9, bei der
- die Lagerteilelemente (22, 24) im Wesentlichen jeweils mit teilkreisförmigem Querschnitt ausgebildet sind.

11. Pedalvorrichtung nach einem der vorangehenden Ansprüche, bei der
- an der Stützstelle (38) ein von einem der Lagerteilelemente vorstehendes Stützelement (40) vorgesehen ist, das am anderen Lagerteilelement (22) in einer Schwenklagerung (42) aufgenommen ist.

12. Pedalvorrichtung nach einem der vorangehenden Ansprüche, bei der
- die Lagerteilelemente (22, 24) Zylindermantelflächen (28, 30) als äußere Lagerflächen aufweisen.

13. Pedalvorrichtung nach einem der vorangehenden Ansprüche, bei der
- die Lagerschale (32, 34) ringförmig mit mindestens einer Zylindermantelfläche (36) als innere Lagerfläche ausgebildet ist.

14. Pedalvorrichtung nach einem der vorangehenden Ansprüche, bei der
- mindestens eine Lagerschale (32, 34) als am Basiselement (12) aufgesetzter Lagerdeckel ausgebildet ist.

15. Pedalvorrichtung nach einem der vorangehenden Ansprüche, bei der
- am Basiselement (12) mindestens zwei axial im Abstand voneinander angeordnete Lagerschalen (32, 34) vorgesehen sind.

## Claims

1. A pedal device, comprising
- a pedal element (14, 18) which can be deflected for actuation in relation to a base element (12),
- and a bearing element (26),
**characterized in that**
the bearing element (26) is accommodated and rotatably mounted in at least one bearing shell (32, 34) on the base element (12), wherein the bearing element (26) comprises at least one first bearing sub-element (22) and one second bearing sub-element (24) which is movable in relation to the first bearing sub-element (22),
- wherein the first bearing sub-element (22) is connected to the pedal element (14, 18),
- at least one resetting element (20) is provided for acting on the second bearing sub-element (24),
- and wherein the first and second bearing sub-elements (22, 24) are arranged with respect to each other such that they are supported in relation to each other at at least one supporting point (38), such that when the pedal element (14, 18) is deflected counter to the action of the resetting element (20), an outwardly directed pressure force arises on the bearing sub-elements (22, 24), by means of which the bearing sub-elements (22, 24) are pressed against the bearing shell (32, 34).

2. The pedal device according to claim 1, in which
- when the pedal element (14, 18) is deflected, the pressure force arises by spreading of the bearing sub-elements (22, 24) in relation to each other.

3. The pedal device according to one of the preceding claims, in which
- the first bearing sub-element (22) is rotatably mounted in the bearing shell about a first axis of rotation (A),
- and the second bearing sub-element (24) is rotatably mounted in the bearing shell (32, 34) about a second axis of rotation (A),
- wherein the supporting point (38) is arranged outside the first and the second pivot axis.

4. The pedal device according to claim 3, in which
- the first and the second bearing sub-elements (22, 24) are mounted in the bearing shell (32, 34) for rotating about a common axis of rotation (A) and the supporting point (38) is arranged at a distance from the axis of rotation (A).

5. The pedal device according to one of the preceding claims, in which
- the first bearing sub-element (22) is part of a pedal lever (14),
- and the second bearing sub-element (24) forms a supporting lever,
- wherein the pedal lever (14) and the supporting lever (39) are pivotable in relation to each other at the supporting point (38).

6. The pedal device according to one of the preceding claims, in which
- the pedal element (14, 18) is coupled to the bearing element (26) such that when the pedal element (14) is deflected in an actuating direction (B), the bearing element (26) rotates in a first direction of rotation,
- and the resetting element (20) is arranged such that it acts upon the bearing element (26) in a second direction of rotation opposed to the first direction of rotation.

7. The pedal device according to one of the preceding claims, in which
- the pedal element (14, 18) is fixedly connected to the first bearing sub-element (22), is preferably configured integrally herewith.

8. The pedal device according to one of the preceding claims, in which
- the resetting element (20) comprises at least one spring which is arranged acting between the base element (12) and the second bearing sub-element (24).

9. The pedal device according to one of the preceding claims, in which
- the bearing element (26) substantially has a round cross-section.

10. The pedal device according to claim 9, in which
- the bearing sub-elements (22, 24) are each substantially configured with a partially circular cross-section.

11. The pedal device according to one of the preceding claims, in which
- a supporting element (40) which protrudes from one of the bearing sub-elements is provided at the supporting point (38), which supporting element is accommodated in a pivot mounting (42) on the other bearing sub-element (22).

12. The pedal device according to one of the preceding claims, in which
- the bearing sub-elements (22, 24) have cylinder lateral surfaces (28, 30) as outer bearing surfaces.

13. The pedal device according to one of the preceding claims, in which
- the bearing shell (32, 34) is configured annularly with at least one cylinder lateral surface (36) as an inner bearing surface.

14. The pedal device according to one of the preceding claims, in which
- at least one bearing shell (32, 34) is configured as a bearing cover placed on the base element (12).

15. The pedal device according to one of the preceding claims, in which
- at least two bearing shells (32, 34) which are arranged axially at a distance from each other are provided on the base element (12).

## Revendications

1. Dispositif à pédale comprenant
- un élément de pédale (14, 18) susceptible d'être déplacé par rapport à un élément de base (12) pour l'actionnement,
- et un élément de palier (26),
**caractérisé en ce que**
l'élément de palier (26) est reçu et monté de façon rotative dans au moins un coussinet de palier (32, 34) sur l'élément de base (12), l'élément de palier (26) comportant au moins un premier élément partiel de palier (22) et un deuxième élément partiel de palier (24) mobile par rapport au premier élément partiel de palier (22),
- dans lequel le premier élément partiel de palier (22) est relié à l'élément de pédale (14, 18),
- il est prévu au moins un élément de rappel (20) destiné à agir sur le deuxième élément partiel de palier (24),
- et dans lequel les premier et deuxième éléments partiels de palier (22, 24) sont disposés de telle façon l'un par rapport à l'autre, qu'ils s'appuient l'un contre l'autre au niveau d'au moins un point d'appui (38), de telle manière que lors d'un déplacement de l'élément de pédale (14, 18) contre l'action de l'élément de rappel (20), une force de pression orientée vers l'extérieur est exercée sur les éléments partiels de palier (22, 24), par laquelle les éléments partiels de palier (22, 24) sont pressés contre le coussinet de palier (32, 34).

2. Dispositif à pédale selon la revendication 1, dans lequel
- la force de pression est produite par écartement des éléments partiels de palier (22, 24) l'un contre l'autre lors d'un déplacement de l'élément de pédale (14, 18).

3. Dispositif à pédale selon l'une des revendications précédentes, dans lequel
- le premier élément partiel de palier (22) est monté de façon rotative autour d'un premier axe de rotation (A) dans le coussinet de palier,
- et le deuxième élément partiel de palier (24) est monté de façon rotative autour d'un deuxième axe de rotation (A) dans le coussinet de palier (32, 34)
- dans lequel le point d'appui (38) est disposé à l'extérieur des premier et deuxième axes de pivotement.

4. Dispositif à pédale selon la revendication 3, dans lequel
- les premier et deuxième éléments partiels de palier (22, 24) sont montés dans le coussinet de palier (32, 34) de manière à tourner autour d'un axe de rotation commun (A) et le point d'appui (38) est disposé à distance de l'axe de rotation (A).

5. Dispositif à pédale selon l'une des revendications précédentes, dans lequel
- le premier élément partiel de palier (22) fait partie d'un levier de pédale (14),
- et le deuxième élément partiel de palier (24) forme un levier d'appui,
- dans lequel le levier de pédale (14) et le levier d'appui (39) peuvent pivoter l'un contre l'autre au point d'appui (38) .

6. Dispositif à pédale selon l'une des revendications précédentes, dans lequel
- l'élément de pédale (14, 18) est accouplé de telle façon à l'élément de palier (26), qu'un déplacement de l'élément de pédale (14) dans une direction d'actionnement (B) résulte dans une rotation de l'élément de palier (26) dans une première direction de rotation,
- et l'élément de rappel (20) est disposé de manière à solliciter l'élément de palier (26) dans une deuxième direction de rotation opposée à la première direction de rotation.

7. Dispositif à pédale selon l'une des revendications précédentes, dans lequel
- l'élément de pédale (14, 18) est relié fixement au premier élément partiel de palier (22), de préférence réalisé d'un seul tenant avec celui-ci.

8. Dispositif à pédale selon l'une des revendications précédentes, dans lequel
- l'élément de rappel (20) comporte au moins un ressort disposé de manière à agir entre l'élément de base (12) et le deuxième élément partiel de palier (24).

9. Dispositif à pédale selon l'une des revendications précédentes, dans lequel
- l'élément de palier (26) présente essentiellement une section transversale ronde.

10. Dispositif à pédale selon la revendication 9, dans lequel
- les éléments partiels de palier (22, 24) sont essentiellement conçus respectivement avec une section transversale en forme d'arc de cercle.

11. Dispositif à pédale selon l'une des revendications précédentes, dans lequel
- au niveau du point d'appui (38), il est prévu un élément d'appui (40) faisant saillie par rapport à l'un des éléments partiels de palier, lequel est reçu dans un palier pivotant (42) sur l'autre élément partiel de palier (22).

12. Dispositif à pédale selon l'une des revendications précédentes, dans lequel
- les éléments partiels de palier (22, 24) présentent des surfaces d'enveloppe cylindriques (28, 30) en tant que surfaces de palier extérieures.

13. Dispositif à pédale selon l'une des revendications précédentes, dans lequel
- le coussinet de palier (32, 34) est conçu annulaire avec au moins une surface d'enveloppe cylindrique (36) en tant que surface de palier intérieure.

14. Dispositif à pédale selon l'une des revendications précédentes, dans lequel
- au moins un coussinet de palier (32, 34) est conçu comme un couvercle de palier placé sur l'élément de base (12).

15. Dispositif à pédale selon l'une des revendications précédentes, dans lequel
- au moins deux coussinets de palier (32, 34) axialement espacés l'un de l'autre sont prévus sur l'élément de base (12) .
